# EUROPÄISCHE PATENTSCHRIFT

(11) **EP 0 413 801 B1**
(45) Veröffentlichungstag und Bekanntmachung des Hinweises auf die Patenterteilung: **02.06.1993**
(21) Anmeldenummer: 90904303.6
(22) Anmeldetag: 02.03.1990
(51) Int. Cl.: B60S 1/34

(54) **SCHEIBENREINIGUNGSANLAGE**
WINDSCREEN CLEANING DEVICE
ESSUIE-GLACE

(30) Priorität: 11.03.1989 DE 3907968
(43) Veröffentlichungstag der Anmeldung: 27.02.1991
(73) Patentinhaber: ITT Automotive Europe GmbH, 60488 Frankfurt am Main (DE)
(72) Erfinder: EGNER-WALTER, Bruno, D-7100 Heilbronn (DE); PLEISS, Eberhard, D-7598 Lauf (DE); SCHMID, Eckhardt, D-7129 Brackenheim (DE)
(86) Internationale Anmeldenummer: EP9000347
(87) Internationale Veröffentlichungsnummer: WO9010561

(56) Entgegenhaltungen:
- EP-A- 323 817
- WO-A-88/04624
- AT-B- 313 083

## Beschreibung

Die Erfindung bezieht sich auf eine Scheibenreinigungsanlage, insbesondere für Kraftfahrzeuge, gemäß den Merkmalen des Oberbegriffs des Anspruchs 1.

Es sind bereits Scheibenreinigungsanlagen bekannt, bei denen zwecks Verbesserung der Wirkung der Waschanlage die Haschflüssigkeit zu Düsen gefördert wird, die am Wischhebel angeordnet sind und mit diesem pendeln. Bei einer aus der AT-B-313 083 bekannten Ausführung dieser Art, die die Merkmale des Oberbegriffs des Anspruchs 1 zeigt, wird die Waschflüssigkeit durch eine Bohrung in einer Hischerwelle gefördert, wobei zur Aufheizung der Waschflüssigkeit in diese Bohrung ein Heizdraht eingelegt ist. Dabei ist dieser Heizdraht lose in dem durch die Bohrung in der Wischerwelle gebildeten Waschflüssigkeitskanal verlegt und steht folglich mit der Waschflüssigkeit in direktem Kontakt, so daß eine einwandfreie Isolierung dieser stromführenden Leiter erforderlich ist. Die schematische Darstellung in dieser Vorveröffentlichung deutet an, daß diese Heizdrähte offenbar einstückig von der Spannungsquelle bis zu den Heizelementen in der Nähe der Düse ausgeführt sind, was eine Hontage bzw. Demontage des zum Wischhebel gehörenden Wischarmes von der Wischerwelle sehr erschwert.

Der vorliegenden Erfindung liegt die Aufgabe zugrunde, eine Scheibenreinigungsanlage der eingangs erwähnten Art mit einer Heizvorrichtung für die Waschflüssigkeit so weiterzubilden, daß eine einfache Montage der Scheibenreinigungsanlage möglich ist und später gegebenenfalls auch der Wischarm leicht ausgewechselt werden kann.

Diese Aufgabe wird erfindungsgemäß mit den kennzeichnenden Merkmalen des Anspruchs 1 gelöst.

Die Erfindung beruht dabei auf der überlegung, daß die Leitungsverbindung zwischen der Batterie und einem am Wischarm angebrachten Heizelement für die Düse an bestimmten Stellen aufgetrennt und durch Steckverbindungen ersetzt werden sollte. Bei der erfindungsgemäßen Ausführung ist deshalb der stromführende Leiter innerhalb der Bohrung der Wischerwelle an einem den eigentlichen Waschflüssigkeitskanal bildenden Rohr verankert, wobei dieses Rohr mit wenigstens einem Endabschnitt, vorzugsweise aber mit zwei Endabschnitten über die Enden der Wischerwelle vorsteht. An diesen Endabschnitten ist dann jeweils ein mit dem Leiter verbundener Kontaktsteg fixiert, mit dem ein lösbares Gegenkontaktstück kontaktiert werden kann Der Wischerwelle ist also gewissermaßen ein eigener Leiter zugeordnet, der von den übrigen Heizdrähten oder Leitern abtrennbar ist. Dadurch ist eine Hontage der Wischeranlage in einem Kraftfahrzeug ohne Schwierigkeiten möglich, denn der Gesamtstromkreis kann nachträglich geschlossen werden.

Das mit dem Kontaktsteg am Rohr zusammenwirkende Gegenkontaktstück kann an einem separaten Stecker fixiert sein. Zur Vereinfachung und Verbilligung der Konstruktion wird jedoch eine Ausführung bevorzugt, bei der dieses Gegenkontaktstück an einem Teil fixiert wird, das zur Bildung der Waschanlage ohnehin benötigt wird. Es sind Ausführungen bekannt, bei denen der antriebsseitige Endabschnitt des Rohres in eine Aufnahme eines Schlauchanschlußstutzens hineinragt. Bei einer solchen Ausführung wird also das Gegenkontaktstück an diesem Schlauchanschlußstutzen festgelegt, wobei darauf geachtet wird, daß bei der Verbindung des Rohrs mit diesem Schlauchanschlußstutzen selbstttätig auch die elektrische Verbindung zwischen den einzelnen Leitern hergestellt wird.

Es sind Ausführungen bekannt, bei denen der andere Endabschnitt des Rohres in eine Aufnahme eines Zwischenstückes hineinragt, wobei dieses Zwischenstück einstückig unmittelbar mit dem Düsenkörper verbunden sein kann oder derart ausgebildet ist, daß ein zur Düse führender Schlauch aufsteckbar ist. Bei einer solchen Ausführung wird dann das Gegenkontaktstück an diesem Zwischenstück so festgelegt, daß bei dessen Montage die elektrisch leitende Verbindung selbsttätig hergestellt wird.

Bei derartigen Scheibenreinigungsanlagen ist eine genaue Justage des Wischarmes vor der Fixierung an der Wischerwelle notwendig, damit in der Parkstellung der Scheibenwischer nicht störend in die zu reinigende Scheibe hineinragt. Dies muß bei der Auslegung der Obergangskontakte berücksichtigt werden, was mit den Merkmalen der Ansprüche 4 bis 6 erreicht wird.

Die Merkmale der Ansprüche 7 bis 9 beziehen sich auf eine fertigungsgerechte Ausbildung der innerhalb der Bohrung der Wischerwelle an dem Rohr festgelegten Leiter derart, daß eine einwandfreie Hontage möglich ist.

Die vorliegende Erfindung bezieht sich in erster Linie auf Ausführungen, bei denen die Waschflüssigkeit auch im Bereich des Rohres aufgehalten werden soll. Es sind aber auch durchaus Ausführungen denkbar, bei denen die Leiter innerhalb des Rohres nur zur Stromzuführung für ein am Wischarm selbst angebrachtes Heizelement dienen. Diese letztgenannte Alternative könnte für Heckwischeranlagen sinnvoll sein, bei denen die Wischerwelle mit dem Antriebsmotor zu einer Baueinheit vereinigt ist und daher schon durch die bei laufendem Motor entstehende Wärme die Wischerwelle und damit die in deren Bohrung fließende Waschflüssigkeit ausreichend aufgeheizt wird.

Grundsätzlich kann das Zwischenstück am abtriebsseitigen Ende der Wischerwelle als separates Teil hergestellt werden. Bevorzugt wird jedoch eine Ausführung gemäß Anspruch 12, bei der dieses Zwischenstück einstückig mit der Abdeckkappe ausgebildet ist, die zur Abdeckung der Verbindung zwischen Wischarm und Wischerwelle ohnehin bei den meisten Wischarmen vorhanden ist. Diese zweckmäßige Maßnahme bringt auch dann Vorteile mit sich, wenn eine Waschflüssigkeitsführung zu einer Düse am Wischarm ohne Heizung realisiert werden soll.

Der von diesem Zwischenstück ausgehende, zu einer Düse am vorderen Ende des Wischarmes führende Schlauch kann betriebssicher verlegt werden, wenn man gemäß Anspruch 17 das Befestigunsteil des Wischarmes mit einem Durchbruch für den Waschflüssigkeitsschlauch ausrüstet. Bei einer solchen Ausführung kann also eine Verlegung des Schlauches seitlich am Befestigungsteil vermieden werden. Diese Lösung weist auch bei nicht beheizbaren Ausführungen Vorteile auf.

Die Erfindung und deren vorteilhafte Ausgestaltungen werden nachstehend anhand der in der Zeichnung dargestellten Ausführungsbeispiele näher erläutert. Es zeigen:
- Fig. 1: einen Schnitt durch eine Scheibenreinigungsanlage im Bereich der Wischerwelle,
- Fig. 2: einen Schnitt durch ein Wischarmende,
- Fig. 3: einen Schnitt entlang der III-III in Fig. 1,
- Fig. 4: einen Teilschnitt ähnlich Fig. 1 bei einem anderen Ausführungsbeispiel,
- Fig. 5: ein auf den Endabschnitt einer Wischerwelle aufknöpfbares Zwischenstück einer anderen Ausführungsform,
- Fig. 6: einen Schnitt entlang der Schnittlinie VI-VI in Fig. 2 und
- Fig. 7: einen Schnitt ähnlich Fig. 6 bei einem anderen Ausführungsbeispiel.

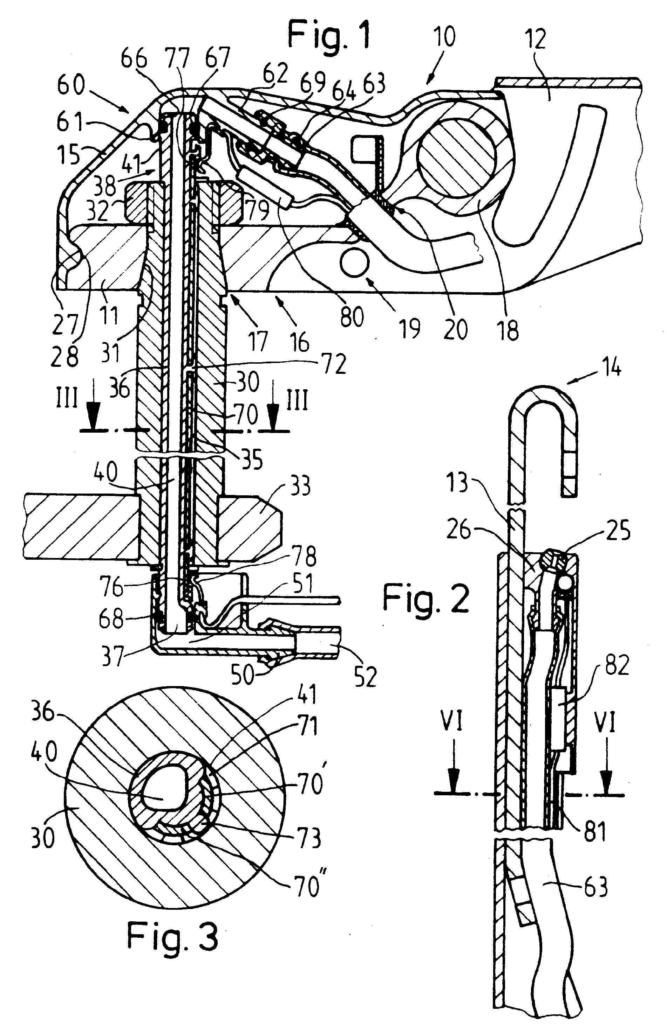

In Fig. 1 mit 10 insgesamt der Wischarm einer Scheibenreinigungsanlage bezeichnet, zu dem in bekannter Weise ein Befestigungsteil 11, ein Gelenkteil 12, eine Wischstange 13 mit einem hakenförmigen Endabschnitt 14 sowie eine Abdeckkappe 15 gehören. Das Befestigungsteil 11 hat einen Befestigungsabschnitt 16 mit einem Durchbruch 17 für die insgesamt mit 30 bezeichnete Wischerwelle sowie einen Lagerabschnitt 18, an dem in bekannter Weise über einen Gelenkniet das Gelenkteil 12 schwenkbar angelenkt ist. In einer Übergangszone 19 zwischen dem Befestigungsabschnitt 16 und dem Lagerabschnitt 18 hat das Befestigungsteil 11 einen Durchbruch 20, dessen Bedeutung später noch erläutert wird.

Die insgesamt mit 30 bezeichnete Wischerwelle hat einen gerändelten Abschnitt, der in dem Durchbruch 17 im Befestigungsabschnitt 16 des Befestigungsteiles 11 steckt. Mittels einer Befestigungsmutter 32 sind die Wischerwelle 30 und der Wischarm 10 drehfest miteinander verspannt. Am antriebsseitigen Ende ist diese Wischerwelle 30 drehfest mit einer Schwinge 33 verbunden. Die Wischerwelle 30 ist in an sich bekannter Weise in einer in der Zeichnung nicht näher dargestellten Lagerbuchse schwenkbar gelagert.

Insbesondere aus Fig. 1 geht deutlich hervor, daß diese Wischerwelle 30 eine durchgehende Bohrung 35 aufweist, in der dünnwandiges Kunststoffrohr 36 steckt. Dieses Rohr 36 ragt mit einem ersten Endabschnitt 37 über das antriebsseitige Ende der Wischerwelle 30 hinaus. Bei dem in Fig. 1 dargestellten Ausführungsbeispiel ragt dieses Rohr 36 außerdem mit einem zweiten Endabschnitt 38 über das abtriebsseitige Ende der Wischerwelle 30, also das mit dem Wischarm 10 verspannte Ende, hinaus. Durch dieses Rohr 36 wird ein insgesamt mit 40 bezeichneter Waschflüssigkeitskanal gebildet, über den Waschflüssigkeit aus einem nicht näher dargestellten Behälter zu einer Düse 25 gefördert wird, die in einem Düsenkörper 26 justierbar gehalten ist, der nahe dem freien Wischarmende 14 an der Wischstange 13 formstabil gehalten ist. Zu dem Waschflüssigkeitsversorgungssystem gehört bei der Ausführung nach Fig. 1 ein Schlauchanschlußstutzen 50 mit einer topfförmigen Aufnahme 51 für den ersten Endabschnitt 37 des Rohres 36. Auf den radial zur Wischerwelle ausgerichteten Schlauchanschlußstutzen 50 ist ein Schlauchstück 52 aufgestülpt, das beispielsweise zur Pumpe der Waschanlage führt. Zu dem Waschflüssigkeitsversorgungssystem gehört außerdem ein Zwischenstück 60, das bei der Ausführung nach Fig. 1 einstückig mit der Abdeckkappe 15 ausgebildet ist. Zu diesem Zwischenstück 60 gehört ein erster Stutzen 61, der über den zweiten Endabschnitt 38 des Rohres 36 gestülpt ist. Zu diesem Zwischenstück 60 gehört außerdem ein zweiter Stutzen 62 zum Anschluß eines Schlauchstückes 63, das zum Düsenkörper 26 führt. Dabei ist bei der Ausführung nach Fig. 1 zwischen diesem Schlauchstück 63 und dem Stutzen 62 ein Schlauchanschlußzwischenstück 64 vorgesehen, das auf den zweiten Stutzen 62 formstabil aufgesteckt ist. Zwischen der Innenfläche 66 des ersten Stutzens 61 und der Mantelfläche 41 des Endabschnittes 38 des Rohres 36 ist ein Dichtring 67 angeordnet, so daß das Rohr 36 nach der in Fig. 1 dargestellten Endmontage des Wischarms flüssigkeitsdicht mit diesem Zwischenstück 60 verbunden ist. Damit durch den Druck der Waschflüssigkeit die Abdeckkappe nicht unbeabsichtigter Weise verschwenkt wird, ist eine stabile Rastung mittels einer Rastnase 27 an der Abdeckkappe 15 und einer Rastaufnahme 28 am Gelenkteil 12 zweckmäßig. Bei einer solchen Ausführung sollte zweckmäßigerweise auf eine Verrastung zwischen dem Stutzen 61 und dem Endabschnitt 38 des Rohres 36 verzichtet werden, damit Verspannungen in der Abdeckkappe vermieden werden, die zu einer Undichtigkeit führen könnten. Natürlich ist eine Abdichtung auch zwischen dem Schlauchanschlußstutzen und dem anderen Endabschnitt 37 des Rohres erforderlich. Dazu ist ebenfalls ein radial wirkender Dichtring 68 vorgesehen. Ein weiterer Dichtring 69 ist zwischen dem Schlauchanschlußzwischenstück 64 und dem zweiten Stutzen 62 angeordnet. Insgesamt ist damit ein Waschflüssigkeitsversorgungssystem geschaffen, das aus mehreren miteinander steckbar verbundenen Teilstücken zusammengesetzt ist, so daß eine einfache Montage möglich ist.

Insbesondere aus Fig. 1 geht hervor, daß dem Waschflüssigkeitskanal 40 wenigstens ein stromführender Leiter 70 zugeordnet ist, der an dem Rohr 36 verankert ist. Dabei dient als Leiter 70 eine aus einer Platine ausgestanzte Leiterbahn, die in einer Tasche 71 in der Mantelfläche 41 des Rohres 36 festgelegt ist. Dabei ragen aus der Mantelfläche 41 des Kunststoffrohrs 36 Ansätze 72 vor, die warmverformt werden und diese Leiterbahnen 70 an der Mantelfläche des Rohres 36 derart halten, daß ein Kontakt mit der metallischen Wischerwelle 30 vermieden ist.

Aus Fig. 3 geht hervor, daß an der Mantelfläche des Rohres 36 zwei Leiter 70' und 70'' angeordnet sind, die durch einen Trennsteg 73 gegeneinander isoliert sind. Die Erfindung ist aber nicht auf eine Ausführung mit zwei Leitern beschränkt, weil ein Leiter, nämlich die Hasseverbindung, auch über die metallische Wischerwelle und den metallischen Wischarm hergestellt werden könnte. Die Leiterbahn 70 verbindet zwei segmentförmig angeordnete Kontaktstege 76 und 77, die an den aus der Wischerwelle 30 vorstehenden Endabschnitten 37, 38 des Rohres 36 festgelegt sind. Jeder dieser segmentförmigen Kontaktstege 76, 77 umgreift die Mantelfläche des zugeordneten Endabschnittes 37, 38 in einem bestimmten Winkelbereich derart, daß eine elektrisch leitende Verbindung mit Gegenkontaktstücken 78, 79 auch dann sichergestellt ist, wenn bei der Montage von einer gewissen Normalstellung abgewichen werden muß.

Fig. 1 zeigt, daß das Gegenkontaktstück 78 als Rastzunge ausgebildet ist, die am Schlauchanschlußstutzen 50 festgelegt ist. Beim Aufstecken des Schlauchanschlußstutzens 50 auf den Endabschnitt 37 des Rohres 36 soll selbsttätig auch die elektrische Leitungsverbindung zwischen dieser federnden Kontaktzunge 78 und dem Kontaktsteg 76 hergestellt werden. Entsprechendes gilt auch bezüglich der anderen Kontaktstelle zwischen der Federzunge 79 und dem Kontaktsteg 77. Die Kontaktzunge 79 ist nämlich an dmem Zwischenstück 60 fixiert und liegt nach der Montage der Abdeckkappe federnd auf dem Kontaktsteg 77 auf. Das Gegenkontaktstück bzw. die Kontaktzunge 78 ist mit einem Anschlußdraht verlötet, der in der Zeichnung nicht näher dargestellt ist. Die andere Kontaktzunge 79 ist über einen Stecker 80 oder auch über eine Lötverbindung mit einem Kabel 81 verbunden, das zu einem Heizelement in der Nähe der Düse 25 führt. Man sieht in Fig. 2, daß im Bereich des Düsenkörpers 26 ein zweiter Steckverbinder 82 vorgesehen sein kann, so daß alle Einzelteile, nämlich die Abdeckkappe, der Düsenkörper und die Wischerwelle einen eigenen zugeordneten Leitungsabschnitt aufweisen, so daß die getrennte Herstellung und die spätere Montage ohne Schwierigkeiten möglich ist.

Bei der Ausführung nach Fig. 1 sind die Leiterbahnen 70 mit den Kontaktstegen 76, 77 einstückig aus einer Platine ausgestanzt und achsparallel an der Mantelfläche 41 des Rohres 36 geführt. Zur Verbesserung der Heizwirkung könnte man aber diese Kontaktbahnen 70 auch spiralförmig an der Mantelfläche des Rohres anordnen. Denkbar sind auch Lösungen, bei denen diese Leiterbahnen in das Rohr eingespritzt sind, so daß ein zusätzlicher Montageschritt entfallen kann und überhaupt keine Gefahr besteht, daß eine elktrisch leitende Verbindung zu der Wischerwelle 30 hergestellt wird.

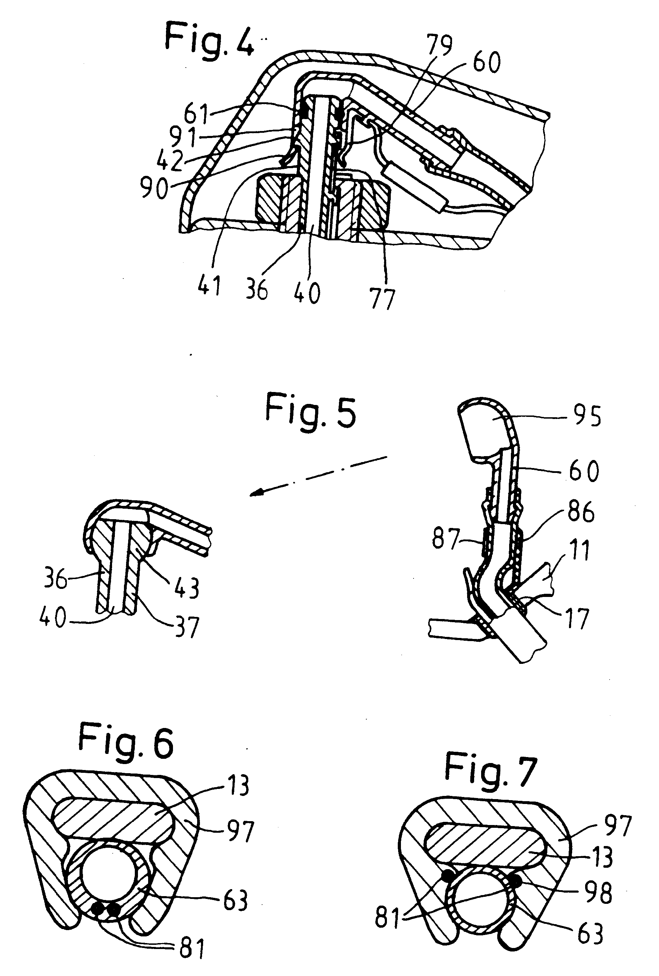

Während bei der Ausführung nach Fig. 1 das Zwischenstück einstückig mit der Abdeckkappe 15 ausgebildet ist, zeigen die Fig. 4 und 5 Lösungen mit einem seapraten Zwischenstück. Dabei wird zur Ausführung gemäß Fig. 4 noch darauf hingewiesen, daß an den Stutzen 61 Rastlappen 90 mit einer Rastaufnahme 91 angeformt sind, in die eine Rastnase 42 eingreift, die radial von der Mantelfläche 41 des Rohres 36 vorsteht. Dabei kann die Rasteinrichtung mit der Rastaufnahme 91 und der Rastnase 42 so ausgebildet sein, daß ein Verschwenken des Zwischenstückes 60 relativ zum Rohr 36 in einem gewissen Umfang möglich ist. Dies ist zweckmäßig, weil die Lage des Wischarmes 10 meist erst nach dem Einbau der gesamten Scheibenreinigungsanlage in ein Kraftfahrzeug festgelegt werden kann.

Fig. 5 zeigt eine Ausführung, bei der der Endabschnitt 37 in einen balligen Rastkörper 43 ausläuft, der in eine entsprechende kugelähnliche Rastaufnahme 95 am Zwischenstück 60 eingreifen kann. Auch bei dieser Ausführung nach Fig. 5 ist das Zwischenstück 60 als separates Bauteil ausgebildet, das nicht mit der Abdeckkappe 15 verbunden ist.

Fig. 6 zeigt, daß auf die Wischstange 13 ein kanalartiges Halteelement 97 aufgerastet ist, das zangenartig das Schlauchstück 63 umgreift. Bei der Ausführung nach Fig. 6 sind dabei Kabel unmittelbar in dieses Schlauchstück 63 integriert. Bei der Ausführung nach Fig. 7 sind dagegen diese Kabel 81 in Längsnuten 98 an diesem Haltelement 97 in unmittelbarer Nähe zum Schlauchstück 63 gehalten.

Im Zusammenhang mit Fig. 5 ist noch darauf hinzuweisen, daß in dem Durchbruch 17 im Befestigungsteil 11 ein Halteelement 86 angeformt ist, das Rastlappen 87 aufweist, zwischen denen das Schlauchstück 63 verrastbar ist. Durch dieses Halteelement soll das Zwischenstück 60 in einer Vormontagestellung gehalten werden, die ein leichtes Aufsetzen des Befestigungsteils 11 auf die Wischerwelle 30 und ein Anziehen der Befestigungsmutter ohne Schwierigkeiten ermöglicht.

Insgesamt ist also zu den in der Zeichnung dargestellten Ausführungsbeispielen abschließend nochmals folgendes zusammenzufassen:

Dem Waschflüssigkeitskanal innerhalb der Wischerwelle ist ein Leiter zugeordnet, der aufgrund seiner Dimensionierung zugleich als Heizelement aber auch als Spannungszuführung für ein weiteres Heizelement in der Nähe der Düse dienen kann. Alternativ ist auch eine Ausführung denkbar, bei der dieser Leiter innerhalb der Wischerwelle nur als Stromzuführung, nicht aber zugleich als Heizelement dient. Zur Bildung des gesamten Waschflüssigkeitsversorgungssystems sind mehrere ineinander steckbare Elemente vorhanden, so daß eine leichte Montage möglich ist und Einzelteile gegebenenfalls auch ausgetauscht werden können. Auch das elektrische Leitungssystem besteht aus mehreren Einzelkomponenten, die lösbar miteinander verbunden sind. Dadurch wird also die Hontage der gesamten Anlage nicht nachtellig beeinträchtigt. Bei der bevorzugten Ausführung sind dabei die einzelnen elektrischen Leiter und die wasserführenden Elemente jeweils derart zusammengefaßt, daß bei einer Montage, beispielsweise des Zwischenstückes, zugleich auch die elektrisch leitende Verbindung hergestellt wird. Dabei muß darauf hingewiesen werden, daß in der Zeichnung das bevorzugte Ausführungsbeispiel dargestellt ist, daß aber durchaus auch Ausführungen denkbar sind, bei denen an einer Stelle eine Lötverbindung anstelle einer Steckverbindung zwischen zwei Leitungsabschnitten möglich ist.

## Patentansprüche

1. Scheibenreinigungsanlage für Kraftfahrzeuge mit einer in einer Lagerbuchse drehbar gelagerten Welle zum Antrieb eines Wischhebels, die eine axiale Bohrung zur Bildung eines Waschflüssigkeitskanals (40) aufweist, dessen erster Endabschnitt (37) am antriebsseitigen Ende der Wischerwelle (30) an einen Waschflüssigkeitszufuhrschlauch anschließbar ist und dessen anderer Endabschnitt (38) am abtriebsseitigen Ende der Wischerwelle (30) mit einem Zwischenstück (60) zur Umleitung der Waschflüssigkeit zu einer Düse (25) verbindbar ist, wobei dem Waschflüssigkeitskanal (40) wenigstens ein stromführender Leiter (70) zur Aufheizung der Waschflüssigkeit zugeordnet ist, dadurch gekennzeichnet,
daß der stromführende Leiter (70) an einem Rohr (36) verankert ist, das in der Bohrung (35) der Wischerwelle (30) angeordnet ist, daß dieses Rohr (36) mit wenigstens einem Endabschnitt (37, 38) über das Ende der Wischerwelle (30) vorsteht und daß an diesem Endabschnitt (37, 38) ein mit dem Leiter (70) verbundener Kontaktsteg (76, 77) fixiert ist, mit dem ein Gegenkontaktstück (78, 79) lösbar verbindbar ist.

2. Scheibenreinigungsanlage nach Anspruch 1,
dadurch gekennzeichnet,
daß ein erster Endabschnitt (37) über das antriebsseitige Ende der Wischerwelle (30) vorsteht, daß an diesem Endabschnitt (37) ein Schlauchanschlußstutzen (50) aufsteckbar ist und daß an diesem Schlauchanschlußstutzen (50) ein erstes Gegenkontaktstück (78) festgelegt ist.

3. Scheibenreinigungsanlage nach Anspruch 1 oder 2, dadurch gekennzeichnet, daß der zweite Endabschnitt (38) des Rohres (35) über das abtriebsseitige Ende der Wischerwelle (30) vorsteht, daß auf diesem zweiten Endabschnitt (38) ein Zwischenstück (60) aufsteckbar ist und daß an diesem Zwischenstück (60) ein Zweites Gegenkontaktstück (79) festgelegt ist.

4. Scheibenreinigungsanlage nach wenigstens einem der vorhergehenden Ansprüche, dadurch gekennzeichnet, daß der Kontaktsteg (76, 77) segmentförmig ausgebildet und an der Mantelfläche (41) des Rohres (36) angeordnet ist und daß als Gegenkontaktstück (78, 79) eine Kontaktzunge dient, die federnd auf dem Kontaktsteg (76, 77) anliegt.

5. Scheibenreinigungsanlage nach Anspruch 4, dadurch gekennzeichnet, daß der Schlauchanschlußstutzen (50) bzw. das Zwischenstück (60) mit dem zugehörigen Endabschnitt (37, 38) des Rohres (36) verrastbar ist, wobei die Rasteinrichtung am Rohr (36) bzw. dem Schlauchanschlußstutzen (50) oder dem Zwischenstück (60) so ausgebildet ist, daß nach erfolgtem Verrasten die Gegenkontaktslücke (78, 79) auf dem zugeordneten Kontaktsteg (76, 77) aufliegen.

6. Scheibenreinigungsanlage nach Anspruch 5, dadurch gekennzeichnet, daß die Rasteinrichtung in begrenztem Umfang eine Verdrehung des Schlauchanschlußstutzens (50) oder des Zwischenstückes (60) relativ zum Rohr (36) zuläßt.

7. Scheibenreinigungsanlage nach wenigstens einem der vorhergehenden Ansprüche, dadurch gekennzeichnet, daß der Leiter (70) mit dem Kontaktsteg (76, 77) als einstückige, aus einer Platine ausgestanzte Leiterbahn ausgebildet und in einer Tasche (71) in der Mantelfläche (41) des Rohres versenkt festgelegt ist.

8. Scheibenreinigungsanlage nach Anspruch 7, dadurch gekennzeichnet, daß die die Kontaktstege (76, 77) verbindende Leiterbahn achsparallel an der Mantelfläche (41) des Rohres (36) festgelegt ist.

9. Scheibenreinigungsanlage nach Anspruch 7,
dadurch gekennzeichnet,
daß die die Kontaktstege verbindende Leiterbahn spiralförmig an der Mantelfläche des Rohres geführt ist.

10. Scheibenreinigungsanlage nach wenigstens einem der vorhergehenden Ansprüche,
dadurch gekennzeichnet,
daß die stromführenden Leiter (70) innerhalb der Wischerwelle (30) so ausgelegt sind, daß sie ausschließlich als Stromzuführung für ein außerhalb der Wischerwelle angeordnetes Heizelement dienen.

11. Scheibenreinigungsanlage nach wenigstens einem der vorhergehenden Ansprüche,
dadurch gekennzeichnet,
daß die stromführenden Leiter (70) innerhalb der Wischerwelle (30) so ausgelegt sind, daß sie als Heizelement dienen.

12. Scheibenreinigungsanlage nach einem der vorhergehenden Ansprüche,
dadurch gekennzeichnet,
daß das Zwischenstück (60) einstückig mit einer Abdeckkappe an dem zum Wischhebel gehörenden Wischarm (10) ausgebildet ist und zwei im Winkel zueinander angeordnete Stutzen (61, 62) aufweist, wobei der erste Stutzen (61) über den Endabschnitt (37) des Rohres (36) gestülpt und der zweite Stutzen (62) zum Anschluß eines Schlauchstückes (63) dient.

13. Scheibenreinigungsanlage nach Anspruch 12,
dadurch gekennzeichnet,
daß auf den zweiten Stutzen (62) ein Schlauchanschlußzwischenstück (64) aufgesteckt ist.

14. Scheibenreinigungsanlage nach Anspruch 12,
dadurch gekennzeichnet,
daß zwischen der Innenfläche (66) des ersten Stutzen (61) und der Mantelfläche (41) des Endabschnittes (37) des Rohres (36) ein Dichtring (67) angeordnet ist.

15. Scheibenreinigungsanlage nach Anspruch 12,
dadurch gekennzeichnet,
daß an den ersten Stutzen (61) wenigstens ein Rastlappen (90) mit einer Rastaufnahme (91) angeformt ist, in die eine von der Mantelfläche (41) des Endabschnittes (37) des Rohres (36) vorstehende Rastnase (92) eingreift.

16. Scheibenreinigungsanlage nach wenigstens einem der Ansprüche 1 bis 11,
dadurch gekennzeichnet,
daß der Endabschnitt (37) des Rohres (36) als balliger Rastkörper (43) ausgebildet ist, der passend in eine entsprechende Rastaufnahme (95) am Zwischenstück (60) eingreift, das als separates Teil unabhängig von der Abdeckkappe (15) des zum Wischhebel gehörenden Wischarms (10) ausgebildet ist.

17. Scheibenreinigungsanlage nach wenigstens einem der vorhergehenden Ansprüche,
dadurch gekennzeichnet,
daß der zum Wischhebel gehörende Wischarm (10) ein Befestigungsteil (11) aufweist, das einen Befestigungsabschnitt (16) mit einer Bohrung (17) für die Wischerwelle (30) und einen Lagerabschnitt (18) zur Anlenkung eines Gelenkteils (12) aufweist, wobei in der Übergangszone (19) zwischen dem Befestigungsabschnitt (16) und dem Lagerabschnitt (18) ein Durchbruch (20) für einen Waschflüssigkeitsschlauch (63) eingearbeitet ist.

18. Scheibenreinigungsanlage nach Anspruch 17,
dadurch gekennzeichnet,
daß in dem Durchbruch (20) eine Buchse (85) verankert ist, an der vorzugsweise einstückig ein Halteelement (86) absteht, an dem ein Schlauchstück (63) in einer Vormontagestellung verrastbar ist.

19. Scheibenreinigungsanlage nach Anspruch 18,
dadurch gekennzeichnet,
daß das Schlauchstück (63) integrierte elektrische Kabel (81) zur Aufheizung aufweist.

20. Scheibenreinigungsanlage nach Anspruch 18,
dadurch gekennzeichnet,
daß auf die Wischstange (13) des Wischarmes (10) ein Schlauchführungselement (97) aufgeklipst ist, das eine Längsnut (98) zur Führung von elektrisch leitenden Kabeln (81) zur Aufheizung des benachbarten Schlauchstückes (63) aufweist.

## Claims

1. A windshield cleaning system for motor vehicles, with a shaft rotatably mounted in a bearing bush for driving a wiper arm-and-blade assembly, which shaft comprises an axial bore for forming a washing liquid channel (40), the first end portion (37) of which on the drive end of the wiper shaft (30) can be connected with a washing liquid supply tube, and the other end portion (38) of which on the driven end of the wiper shaft (30) can be connected with an intermediate piece (60) for diverting the washing liquid to a jet (25), whereby at least one electric conductor (70) for heating the washing liquid is assigned to the washing liquid channel (40), wherein the electric conductor (70) is anchored on a pipe (36), which is arranged in the bore (35) of the wiper shaft (30), wherein this pipe (36) extends the end of the wiper shaft (30) by way of at least one end portion (37, 38), and wherein a contact web (76, 77) connected with the conductor (70) is fixed onto this end portion (37, 38), with which contact web (76, 77) a counter contact piece (78, 79) can detachably be connected.

2. A windshield cleaning system according to claim 1, wherein a first end portion (37) extends the drive end of the wiper shaft (30), wherein a tube connecting stud (50) can be plugged onto this end portion (37), and wherein a first counter contact piece (78) is fixed onto this tube connecting stud (50).

3. A windshield cleaning system according to claim 1 or 2, wherein the second end portion (38) of the pipe (36) extends the driven end of the wiper shaft (30), wherein an intermediate piece (60) can be plugged onto this second end portion (38), and wherein a second counter contact piece (79) is fixed onto this intermediate piece (60).

4. A windshield cleaning system according to at least one of the preceding claims, wherein the contact web (76, 77) is formed as a segment and is arranged on the circumference (41) of the pipe (36) and wherein a contact lug serves as a counter contact piece (78, 79), which contact lug resiliently lies on the contact web (76, 77).

5. A windshield cleaning system according to claim 4, wherein the tube connecting stud (50) or the intermediate piece (60) can be locked with the respective end portion (37, 38) of the pipe (36), whereby the locking device on the pipe (36) or the tube connecting stud (50) or the intermediate piece (60) is formed in such a way that after the locking the counter contact pieces (78, 79) lie on the respective contact web (76, 77).

6. A windshield cleaning system according to claim 5, wherein the locking device permits - to a certain extent - a twisting of the tube connecting stud (50) or of the intermediate piece (60) in relation to the pipe (36).

7. A windshield cleaning system according to at least one of the preceding claims, wherein the conductor (70) with the contact web (76, 77) is formed as an integral conductor strip punched out of a blank and is fixed in a pocket (71) in the circumference (41) of the pipe in a depressed way.

8. A windshield cleaning system according to claim 7, wherein the conductor strip connecting the contact webs (76, 77) is fixed onto the circumference (41) of the pipe (36) parallelly to the axis of the pipe (36).

9. A windshield cleaning systemm according to claim 7, wherein the conductor strip connecting the contact webs is spirally guided on the circumference of the pipe.

10. A windshield cleaning system according to at least one of the preceding claims, wherein electric conductors (70) of such a sort are used within the wiper shaft (30) that they exclusively serve as electricity supply for a heating element located outside the wiper shaft.

11. A windshield cleaning system according to at least one of the preceding claims, wherein electric conductors (70) of such a sort are used within the wiper shaft (30) that they serve as heating elements.

12. A windshield cleaning system, especially according to one of the preceding claims, wherein the intermediate piece (60) is integrally formed with a cover cap on the wiper arm (10) belonging to the wiper arm-and-blade assembly and comprises two studs (61, 63) angularly arranged to each other, whereby the first stud (61) is put over the end portion (37) of the pipe (36) and the second stud (62) serves for connecting a tube piece (63).

13. A windshield cleaning system according to claim 12, wherein a tube connecting intermediate piece (64) is plugged onto the second stud (62).

14. A windshield cleaning system according to claim 12, wherein a seal ring (67) is arranged between the inner surface (66) of the first stud (61) and the circumference (41) of the end portion (37) of the pipe (36).

15. A windshield cleaning system according to claim 12, wherein at least one locking tab (90) with a locking receiver (91) is formed onto the first stud (61), into which locking receiver (91) a locking lug (92) extending the circumference (41) of the end portion (37) of the pipe (36) engages.

16. A windshield cleaning system according to at least one of the claims 1 to 11, wherein the end portion (37) of the pipe (36) is formed as a ball-like locking body (43) fittingly engaging into a respective locking receiver (95) on the intermediate piece (60), which is formed as a separate part independently of the cover cap (15) of the wiper arm (10) belonging to the wiper arm-and-blade assembly.

17. A windshield cleaning system according to at least one of the preceding claims, wherein the wiper arm (10) belonging to the wiper arm-and-blade assembly comprises a fastening member (11), which comprises a fastening section (16) with a bore (17) for a wiper shaft (30) and a bearing section (18) for mounting a link member (12), whereby an aperture (20) for a washing liquid tube (63) is worked into the transitional zone (19) between the fastening section (16) and the bearing section (18).

18. A windshield cleaning system according to claim 17, wherein a bush (85) is anchored in the aperture (20), of which bush (85) a holding element (86), onto which a tube piece (63) can be locked in a pre-assembly position, is preferably integrally sticking out.

19. A windshield cleaning system according to claim 18, wherein the tube piece (63) comprises integrated electric cables (81) for heating.

20. A windshield cleaning system according to claim 18, wherein a tube guiding element (97) is clipped onto the wiper rod (13) of the wiper arm (10), which tube guiding element (97) comprises an elongated groove (98) for guiding electric cables (81) for heating the adjacent tube piece (63).

## Revendications

1. Installation d'essuie-glace pour véhicule automobile, comprenant un arbre qui est monté rotatif dans un palier et sert à entraîner un essuie-glace et qui comporte un alésage axial servant à former un conduit de liquide de lavage (40) dont un premier tronçon extrême (37), situé à l'extrémité de l'arbre d'essuie-glace (30) qui est disposée du côté de l'entraînement, est agencé de façon à pouvoir être raccordé à un tuyau souple d'arrivée de liquide de lavage et dont l'autre tronçon extrême (38), situé à l'extrémité de l'arbre d'essuie-glace (30) qui est disposée du côté de la sortie de mouvement, est agencé de façon à pouvoir être relié à un gicleur (25) au moyen d'une pièce intermédiaire (60) servant à dévier le liquide de lavage, tandis qu'au moins un conducteur de courant (70) servant au chauffage du liquide de lavage est associé à ce conduit de liquide de lavage (40), caractérisée en ce que le conducteur de courant (70) est ancré à un tube (36) qui est disposé dans l'alésage (35) de l'arbre d'essuie-glace (30), en ce que, par au moins un tronçon extrême (37, 38), ce tube (36) fait saillie au-delà de l'extrémité de l'arbre d'essuie-glace (30) et en ce que, sur ce tronçon extrême (37, 38), il est fixé une barrette de contact (76, 77) qui est reliée au conducteur (70) et à laquelle une pièce formant contact complémentaire (78, 79) peut être reliée d'une manière amovible.

2. Installation d'essuie-glace suivant la revendication 1, caractérisée en ce qu'un premier tronçon extrême (37) fait saillie au-delà de l'extrémité de l'arbre d'essuie-glace (30) qui est disposée du côté de l'entraînement, en ce qu'un embout tubulaire (50) de raccordement de tuyau souple peut être emboîté sur ce tronçon extrême (37) et en ce qu'une première pièce formant contact complémentaire (78) est fixée sur cet embout tubulaire (50) de raccordement de tuyau souple.

3. Installation d'essuie-glace suivant l'une des revendications 1 et 2, caractérisée en ce que le second tronçon extrême (38) du tube (36) fait saillie au-delà de l'extrémité de l'arbre d'essuie-glace (30) qui est disposée du côté de la sortie de mouvement, en ce qu'une pièce intermédiaire (60) est agencée de façon à pouvoir être emboîtée sur ce second tronçon extrême (38) et en ce qu'une seconde pièce formant contact complémentaire (79) est fixée sur cette pièce intermédiaire (60).

4. Installation d'essuie-glace suivant au moins l'une des revendications précédentes, caractérisée en ce que la barrette de contact (76, 77) est réalisée sous une forme segmentée et est disposée sur la surface cylindrique (41) du tube (36) et en ce qu'une languette de contact qui prend appui élastiquement sur cette barrette de contact (76, 77) sert de pièce formant contact complémentaire (78, 79).

5. Installation d'essuie-glace suivant la revendication 4, caractérisée en ce que l'embout tubulaire (50) de raccordement de tuyau souple et la pièce intermédiaire (60) sont respectivement agencés de façon à pouvoir faire l'objet d'un enclenchement avec le tronçon extrême associé (37, 38) du tube (36), les moyens d'enclenchement prévus respectivement sur le tube (36) et sur l'embout tubulaire (50) de raccordement de tuyau souple, ou sur la pièce intermédiaire (60) sont agencés de façon telle qu'une fois un enclenchement réalisé, les pièces formant contact complémentaire (78, 79) sont appliquées sur la barrette de contact associée (76, 77).

6. Installation d'essuie-glace suivant la revendication 5, caractérisée en ce que les moyens d'enclenchement autorisent sur une étendue limitée un déplacement en rotation de l'embout tubulaire (50) de raccordement de tuyau souple ou de la pièce intermédiaire (60) par rapport au tube (36).

7. Installation d'essuie-glace suivant au moins l'une des revendications précédentes, caractérisée en ce que le conducteur (70) est réalisé avec la barrette de contact (76, 77) sous la forme d'une piste conductrice d'une seule pièce, découpée à l'emporte-pièce dans un flan, et est fixé en retrait dans un logement (71) ménagé dans la surface cylindrique (41) du tube.

8. Installation d'essuie-glace suivant la revendication 7, caractérisée en ce que la piste conductrice réunissant les barrettes de contact (76, 77) est fixée à la surface cylindrique (41) du tube (36) parallèlement à son axe.

9. Installation d'essuie-glace suivant la revendication 7, caractérisée en ce que la piste conductrice réunissant les barrettes de contact s'étend en hélice sur la surface cylindrique du tube.

10. Installation d'essuie-glace suivant au moins l'une des revendications précédentes, caractérisée en ce que le conducteur de courant (70) est disposé à l'intérieur de l'arbre d'essuie-glace (30) de façon à servir exclusivement à réaliser une arrivée de courant pour un élément de chauffage disposé à l'extérieur de l'arbre d'essuie-glace.

11. Installation d'essuie-glace suivant au moins l'une des revendications précédentes, caractérisée en ce que le conducteur de courant (70) est agencé à l'intérieur de l'arbre d'essuie-glace (30) de façon à servir d'élément de chauffage.

12. Installation d'essuie-glace suivant l'une des revendications précédentes, caractérisée en ce que la pièce intermédiaire (60) est réalisée d'une pièce avec un capuchon de recouvrement disposé sur le bras porte-balai (10) faisant partie de l'essuie-glace et comprend deux tronçons tubulaires (61, 62) faisant un certain angle entre eux, le premier tronçon tubulaire (61) étant emboîté sur le tronçon extrême (37) du tube (36) et le second tronçon tubulaire (62) servant de raccord pour une section de tuyau souple (63).

13. Installation d'essuie-glace suivant la revendication 12, caractérisée en ce qu'une pièce intermédiaire (64) de raccordement de tuyau souple est emboîtée sur le second tronçon tubulaire (62).

14. Installation d'essuie-glace suivant la revendication 12, caractérisée en ce qu'une bague d'étanchéité (67) est disposée entre la surface intérieure (66) du premier tronçon tubulaire (61) et la surface cylindrique (41) du tronçon extrême (37) du tube (36).

15. Installation d'essuie-glace suivant la revendication 12, caractérisée en ce qu'au moins une lèvre d'enclenchement (90) est formée sur le premier tronçon tubulaire (61), cette lèvre d'enclenchement (90) comportant un évidement d'enclenchement (91) dans lequel s'emboîte un bec d'enclenchement (42) faisant saillie sur la surface cylindrique (41) du tronçon extrême (37) du tube (36).

16. Installation d'essuie-glace suivant au moins l'une des revendications 1 à 11, caractérisée en ce que le tronçon extrême (37) du tube (36) est réalisé sous la forme d'un corps d'enclenchement (43) sphérique qui s'emboîte, en en épousant la forme, dans un logement d'enclenchement (95) correspondant qui est réalisé sur la pièce intermédiaire (60), sous la forme d'une pièce séparée indépendante du capuchon de recouvrement (15) du bras porte-balai (10) faisant partie de l'essuie-glace.

17. Installation d'essuie-glace suivant au moins l'une des revendications précédentes, caractérisée en ce que le bras porte-balai (10) faisant partie de l'essuie-glace comprend une partie de fixation (11) qui comporte une section de fixation (16), présentant un passage (17) pour l'arbre d'essuie-glace (30), et une section-palier (18) permettant l'articulation d'une partie articulée (12), un passage (20) étant ménagé pour un tuyau souple de liquide de lavage (63) dans la zone de transition (19) située entre la section de fixation (16) et la section-palier (18).

18. Installation d'essuie-glace suivant la revendication 17, caractérisée en ce que, dans le passage (20), il est ancré une douille (85) sur laquelle fait saillie, de préférence d'une seule pièce, un élément de maintien (86) sur lequel une section de tuyau souple (63) peut être fixée par enclenchement dans une position de montage préalable.

19. Installation d'essuie-glace suivant la revendication 18, caractérisée en ce que la section de tuyau souple (63) comporte, sous une forme intégrée, des câbles électriques (81) servant au chauffage.

20. Installation d'essuie-glace suivant la revendication 18, caractérisée en ce qu'un élément de guidage de tuyau souple (97) est fixé à la façon d'une agrafe sur la tige (13) du bras porte-balai (10), cet élément (97) comportant une rainure longitudinale (98) servant à guider des câbles conducteurs électriques (81) destinés au chauffage de la section de tuyau souple (63) voisine.
